(19) Europäisches Patentamt
European Patent Office
Office européen des brevets

(11) Veröffentlichungsnummer: **0 012 717**
**B1**

(12) # EUROPÄISCHE PATENTSCHRIFT

(45) Veröffentlichungstag der Patentschrift: **26.01.83**

(51) Int. Cl.³: **A 01 N 25/32,** A 01 N 43/70 // (A01N43/70, 43/40)

(21) Anmeldenummer: **79810165.5**

(22) Anmeldetag: **26.11.79**

(54) **Verfahren und Mittel zur selektiven preemergenten Bekämpfung von Unkräutern in Getreidekulturen.**

(30) Priorität: **01.12.78 CH 12305/78**

(43) Veröffentlichungstag der Anmeldung: **25.06.80 Patentblatt 80/13**

(45) Bekanntmachung des Hinweises auf die Patenterteilung: **26.01.83 Patentblatt 83/04**

(84) Benannte Vertragsstaaten: **BE CH DE FR GB IT NL**

(56) Entgegenhaltungen:
**EP A 0 000 176**
**EP A 0 000 474**
**EP A 0 003 313**
**EP A 0 003 890**
**EP A 0 004 414**
**DE A 2 808 317**
**DE A 2 834 744**
**DE A 2 844 989**
**FR A 2 184 906**
**FR A 2 277 811**
**FR A 2 348 908**
**FR A 2 379 251**
**GB A 1 543 964**
**GB A 2 002 636**
**US A 4 059 435**

(73) Patentinhaber: **CIBA-GEIGY AG**
**Patentabteilung Postfach**
**CH-4002 Basel (CH)**

(72) Erfinder: **Quadranti, Marco**
**Promenade 24**
**CH-5200 Brugg (CH)**
Erfinder: **Gerber, Hans-Rudolf, Dr.**
**Blözenweg 49**
**CH-4133 Pratteln (CH)**

**EP 0 012 717 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren und Mittel zur selektiven preemergenten Bekämpfung von Unkräutern in Getreidekulturen

Seit ihrer Einführung im Maisanbau wurde versucht, s-Triazine, insbesondere Chlor-s-triazine auch im Getreideanbau zur Anwendung zu bringen. Es gelang, unter bestimmten Klima- und Bodenbedingungen, Simazin (2-Chlor-4,6-bis-äthylamino-s-triazin) in Aufwandmengen von 200-400 g/ha im Vorauflauf einzusetzen. Dabei wurde aber trotz Beachtung aller Faktoren (Boden, Klima etc.) das Getreide sehr häufig geschädigt. Zudem reichte die geringe getreideunschädliche Menge an eingesetztem Triazin nur aus, um einige wenige sehr empfindliche Unkrautarten zu bekämpfen.

Aus der Reihe der Phenylharnstoffe wurde ebenfalls versucht, Diuron ([N-(3,4-Dichlorphenyl)-N'-dimethylharnstoff], das heute noch in Baumwolle sowie im Obst- und Weinbau angewendet wird, in Getreide als Vorauflaufherbizid selektiv einzusetzen. Auch andere Phenylharnstoffe, wie Fluometuron und Chlorbromuron konnten trotz gelegentlich guter Zufalls-Resultate im Vorauflauf in Getreide nicht zufriedenstellend angewendet werden.

Im heutigen Getreideanbau stellen sich folgende wichtige Probleme :

In Wintergerste treten mit den heute stark erhöhten Kunstdüngergaben vermehrt Probleme mit Dicotylen-Unkräutern auf. Einige bis dahin gebräuchliche Vorauflauf-Herbizide vermögen dieser Situation nicht mehr zu genügen. Es bilden sich dichte und die Kulturpflanzen stark schädigende Bestände von Viola tricolor, Stellaria media, Veronica ssp., Galium aparine, Polygonum ssp., etc.

In Winterweizen treten neuerdings ähnlich starke Verunkrautungen mit Dicotylen auf wie in Wintergerste. Vor allem stellen dort starke Verunkrautungen mit Galium, Veronica, Viola tricolor und den Gräserns Alopecurus myos. und Lolium perenne ein grosses Problem dar.

In Sommerweizen und Sommergerste konnten im Vorauflauf bisher noch keine selektiven Herbizide eingesetzt werden. Alle Sorten dieser Getreidearten reagierten bis jetzt zu empfindlich auf Vorauflaufherbizide.

Es wurde nun überraschenderweise gefunden, dass gewisse s-Triazine vom Getreide besser toleriert werden, wenn sie bei einer Vorauflaufapplikation zusammen mit Derivaten aus der Reihe der Pyridyloxy-phenoxy-propansäuren angewendet werden, insbesondere als Gemische. Besonders augenfällig ist diese « Antidote »- oder « Safening »-Wirkung bei Chlortriazinen, wie 2-Chlor-4-äthylamino-6-tert. butylamino-s-triazin, Simazin usw. Diese Triazine büssen dabei ihre gute Wirkung gegen Unkräuter nicht ein, d.h. Gerste, Weizen und Roggen können auf selektive Art so antagonisiert werden, dass sie in allen Situationen im Vorauflauf eine Dosis dieser Triazine ertragen, die gegen die wichtigsten Ukrautarten voll wirksam bleibt. Die oben geschilderten Probleme in den verschiedenen Getreidearten können somit im Vorauflauf gelöst werden. Dabei wird ein ursprünglich nicht selektives Herbizid mit breitem Wirkungsspektrum auf antagonistische Weise durch die Zugabe gewisser Pyridyloxy-phenoxy-propansäurederivate auf ein selektives Niveau gehoben, obwohl solche Propansäurederivate selbst auch herbizide Eigenschaften besitzen, wie aus einer grossen Zahl Publikationen hervorgeht.

Das erfindungsgemässe Verfahren zur selektiven preemergenten Bekämpfung von Unkräutern in Getreidekulturen ist dadurch gekennzeichnet, dass man angesäte oder zur Getreideansaat vorgesehene landwirtschaftliche Anbauflächen gleichzeitig oder nacheinander einerseits mit einem Herbizid aus der Reihe der 4,6-bis($C_1$-$C_4$-alkyl)amino-s-triazine, welche in der 2-Position durch Chlor, Brom, Methoxy, Methylthio oder Aethylthio substituiert sind, und andererseits mit einem antagonisierend wirkenden Pyridyl-(2)-oxy-phenoxy-α-propionthiolsäurederivat der Formel I

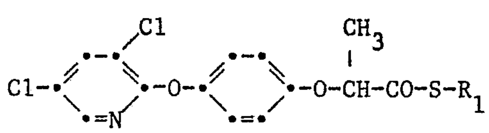

(I)

behandelt, um die schädigende Wirkung des genannten Triazinherbizids auf das Getreide abzuschwächen oder aufzuheben, ohne die Herbizidwirkung auf die Unkräuter merklich zu beeinträchtigen, wobei in der Formel I der Test $R_1$ Wasserstoff ; $C_1$-$C_{18}$-Alkyl, das durch Halogen oder durch eine Cyanogruppe substituiert sein kann ; den β-Diäthylaminoäthylrest ; gegebenenfalls durch Halogen substituiertes $C_3$-$C_{18}$-Alkenyl ; $C_3$-$C_8$-Alkenyl, oder Phenyl bedeutet, mit der Massgabe, dass das angewendete Mengenverhältnis von Triazinherbizid zu Propionthiolsäurederivat zwischen 4 : 1 und 1 : 4 beträgt.

Man kann die Behandlung mit den beiden Wirkstofftypen nacheinander in beliebiger Reihenfolge durchführen, vorzugsweise wird die Behandlung jedoch gleichzeitig unter Verwendung eines Mittels vorgenommen, welches je einen der beiden Wirkstofftypen in Mischung enthält, also das Triazin und das als Safener dienende propionsäurederivat der Formel I.

Die Erfindung betrifft also auch dieses Mittel, das neben üblichen Träger- bzw. Zuschlagstoffen als aktive herbizide Komponente ein 4,6-bis($C_1$-$C_4$-alkyl)amino-s-triazin, welches in 2-Stellung durch Chlor, Brom, Methoxy, Methylthio oder Aethylthio substituiert ist, und als antagonisierende Komponente ein Pyridyl-(2)-oxy-phenoxy-α-propionthiolsäurederivat der Formel I

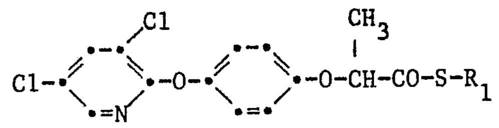

(I)

enthält, worin $R_1$ Wasserstoff; $C_1$-$C_{18}$-Alkyl, das durch Halogen oder durch eine Cyanogruppe substituiert sein kann; den β-Diäthylaminoäthylrest, gegebenenfalls durch Halogen substituiertes $C_3$-$C_{18}$-Alkenyl, $C_3$-$C_8$ Alkinyl; oder Phenyl bedeutet, wobei das gegenseitige Mengenverhältnis von Triazinkomponente zu antagonisierender Komponente der Formel I zwischen 4 : 1 und 1 : 4 beträgt.

Als herbizide Bis-alkylamino-s-triazine sind in erster Linie folgende Chlor- oder Brom-bis(alkylamino)-s-triazine und Methylthio-, Aethylthio- oder Methoxy-bis(alkylamino)-s-triazine zu nennen:

Simazin, Atrazin, Terbutylazin (2-Chlor-4-äthylamino-6-tert. butylamino-s-triazin), 2-Chlor-4-äthylamino-6-sec. butylamino-s-triazin, Propazin, Norazin (2-Chlor-4-methylamino-6-isopropylamino-s-triazin), 2-Chlor-4-methylamino-6-tert. butylamino-s-triazin, Atraton, Prometon, 2-Methoxy-4-äthylamino-6-tert. butylamino-s-triazin, 2-Methoxy-4-äthylamino-6-sec. butylamino-s-triazin (= Sumitol), Ametryn, Prometryn, Terbutryn, 2-Aethylthio-4,6-bis(isopropylamino)s-triazin (= Dipropetryn, Methoprotryn 2-Methyltio-4-methylamino-6-isopropylamino-s-triazin (= Desmetryn), 2-Methylthio-4-äthylamino-6-sec. butylamino-s-triazin, 2-Brom-4-äthylamino-6-isopropylamino-s-triazin.

Die unter Formel I fallenden, als Safener zur Antagonisierung der Schadwirkung dieser Triazine auf das Getreide dienenden Pyridyloxy-phenoxypropion-thiolsäurederivate bilden den Gegenstand älterer Patentanmeldungen. Viele nahe verwandte Halogenpyridyloxy-α-phenoxy-propionsäurederivate sind als herbizide Wirkstoffe z.B. aus folgenden Patentpublikationen bekannt geworden:

DE-A 2 546 251; DE-A 2 732 846; Jap. 51-139627; Jap. 51-142537; Jap. 52-87173; Jap. 52-125626; Jap. 52-131542; Jap. 53-24489; Jap. 53-27768.

Eine Auswahl der als Safener verwendbaren Derivate der Formel I ist nachstehend aufgeführt:

1. 4-(3′,5′-Dichlorpyridyl-(2′)-oxy)-α-phenoxy-propionthiolsäure (Fp. 85-87°)
2. 4-(3′,5′-Dichlorpyridyl-2′-oxy)-α-phenoxy-propionthiolsäure-allylester ($n_D^{21}$ = 1,585 4)
3. 4-(3′,5′-Dichlorpyridyl-2′-oxy)-α-phenoxy-propionthiolsäure-β-chloräthylester ($n_D^{20}$ = 1,587 2)
4. 4-(3′,5′-Dichlorpyridyl-2′-oxy)-α-phenoxy-propionthiolsäure-cyanomethyl-ester (Fp. 85-88°)
5. 4-(3′,5′-Dichlorpyridyl-2′-oxy)-α-phenoxy-propionthiolsäure-propargylester ($n_D^{21}$ = 1,598 8)
6. 4-(3′,5′-Dichlorpyridyl-2′-oxy)-α-phenoxy-propionthiolsäure-methylester ($n_D^{21}$ = 1,579 6)
7. 4-(3′,5′-Dichlorpyridyl-2′-oxy)-α-phenoxy-propionthiolsäure-β-diäthylamino-äthyl-ester ($n_D^{20}$ = 1,561 6)
8. 4-(3′,5′-Dichlorpyridyl-2′-oxy)-α-phenoxy-propionthiolsäure-phenylester ($n_D^{20}$ = 1,616 9)
9. 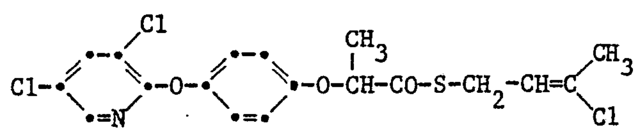 ($n_D^{25}$ = 1,5772)

Besonders überraschend ist die Tatsache, dass die aufgelisteten verbindungen der Formel I, wenn allein angewandt, oft selbst herbizide Eigenschaften besitzen, aber zusammen mit Herbiziden aus der Reihe der genannten Triazine angewendet, als Gegenmittel oder « Antidote » wirken und die pflanzenschädigende Wirkung dieser Triazine auf Getreidearten im Sinne eines « Safeners » antagonisieren, ohne jedoch die Herbizidwirkung auf die Unkräuter aufzuheben oder merklich zu schwächen.

In DE-A-2 808 317 sind halogenierte Diphenylätherderivate beschrieben, welche ebenfalls die Fähigkeit haben, Pflanzen vor dem Angriff von Herbiziden, wie Triazinen u.a. zu schützen. Diese vorbekannten Verbindungen weisen als für diese antagonisierende Wirkung massgebendes Strukturelement eine Oximgruppierung —C = N—O— auf. Die Chlorpyridyloxy-phenoxy-propionsäure-derivate der Formel I als Antagonisten vorliegender Erfindung besitzen keine solche Oxim-Struktur und ihre antagonistische Wirkung konnte niemals aus der Kenntnis der DE-A-2 808 317 abgeleitet oder vermutet werden, umsomehr als dort auch Verbindungen mit Oximstruktur als Antagonisten beschrieben sind, die keine Diphenyläther-Konfiguration besitzen.

In den beiden FR-A 2 184 906 und 2 348 908 sind 4-(Chlorphenoxy)-α-phenoxy-propionsäuren und Ester davon sowie ein 4-(4′-Trifluormethyl-phenoxy)-α-phenoxy-propionsäureester zur selektiven pre-emergenten Unkrautbekämpfung in Getreide vorgeschlagen worden. Dabei wird die Herbizidwirkung dieser strukturell den Antagonisten vorliegender Erfindung nahestehenden verbindungen selbts ausgenützt, und die Anwendung in Getreide erfolgt in Abwesenheit von anderen Herbiziden wie Triazinen.

Beim vorliegenden erfindungsgemässen Verfahren dienen Triazine als herbizide Komponente und die Pyridyloxy-phenoxy-propionthiolsäurekomponente spielt nicht die Rolle eines Herbizids, sondern die eines Abschwächers der zu hohen Herbizidwirkung der Triazine auf das Getreide. Aus obigen französischen patentpublikationen geht eine solche antagonisierende Wirkung nicht hervor. Es ist eine

besonders überraschende und unerwartete Erkenntnis, dass die verbindungen der Formel I, bei denen man auf Grund des Standes der Technik eine eigene Herbizidwirkung hat vermuten müssen, genau den gegenteiligen Effekt der Abschwächung der Schadwirkung auf Getreide von mit ihnen zusammen angewendeten hochwirksamen Triazinherbiziden bei pre-emergenter Anwendung ergeben.

Die Anwendung der Triazinherbizide und der Antagonisten der Formel I erfolgt pre-emergent auf alle Getreidearten (Weizen, Roggen, Gerste, Hafer), gegebenenfalls auch auf Mais und Reis.

Die Applikation kann gleichzeitig oder nacheinander in beliebiger Reihenfolge durchgeführt werden, vorzugsweise jedoch gleichzeitig unter Verwendung eines Mittels, das beide Komponenten enthält.

Die bevorzugte Dosierung liegt bei 0,5 bis 2 kg/ha an Triazin und etwa gleichen Mengen Antagonist der Formel I.

Das gegenseitige Mengenverhältnis Triazin : Antagonist kann zwischen 4 : 1 und 1 : 4, insbesondere 2 : 1 und 1 : 2 schwanken, liegt aber vorzugsweise um 1 : 1 oder bei einem leichten Ueberschuss einer der beiden Komponenten.

Die Vorauflauf-Anwendung des Mittels geschieht vorzugsweise nach der Einsaat aus einer Tankmischung des Mittels.

Es ist aber auch möglich, die Saatfurchen vor der Saat zu behandeln ; ebenso liegt eine Vorbehandlung des Saatgutes (Samenbeizung) bei gewissen Wirkstoffkombinationen im Bereiche der Möglichkeit.

Unter den Triazinen wurden ausgedehnte Versuche mit 2-Chlor-4-äthylamino-6-tert.butylamino-s-triazin (« Terbutylyazin ») der Formel

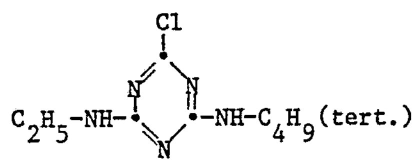

mit ausgezeichneten Ergebnissen bezüglich Aufhebung der Phytotoxizität auf verschiedene Getreidearten bei gemeinsamer Anwendung mit den verschiedensten Antagonisten der Formel I in Vorauflaufapplikation durchgeführt.

Gute Ergebnisse wurden aber auch mit anderen Triazinen, wie Terbutryn, Prometryn, 2-Methoxy-äthylamino-6-tert. butylamino-s-triazin, 2-Methoxy-4-äthylamino-6-sec. butylamino-s-triazin, Simazin, Atrazin, 2-Aethylthio-4,6-bis(isopropylamino)-s-triazin (« Cotofor ») erzielt.

Nachstehend werden Versuchsergebnisse bei pre-emergenter Applikation von Mischungen aus Triazinen und Antagonisten der Formel I auf Getreidearten und Unkräuter wiedergegeben, um die reduzierte Phytotoxizität des erfindungsgemässen Mittels auf Getreide unter Beibehaltung der Schadwirkung auf Unkräuter zu demonstrieren :

Vorauflauf-Antidote-Test (Grundtest)

Allgemeine Methodik :

Kleine Blumentöpfe oder Becher (oberer ∅ 6 cm oder 11 cm) werden im Gewächshaus mit normaler Ackererde gefüllt, in welche die Kultur- bzw. Unkrautpflanze eingesät, bedeckt und leicht festgedrückt wird. Eine flüssige Aufarbeitung eines Gemisches von Gegenmittel (Antidote) und Herbizid der Triazinreihe in einem bestimmten gegenseitigen Mischungsverhältnis (Tankmischung) wird dann auf die Blumentöpfe aufgesprüht und zwar in Mengen, die bestimmten Werten in kg Wirkstoff pro Hektar entsprechen. Eine Gruppe Blumentöpfe werden nur mit Herbizid-Spritzbrühen ohne Antidote zu Kontrollzwecken behandelt. Nach 3 Wochen Stehen bei 20-23 °C und 60-70 % relativer Luftfeuchtigkeit wird der versuch nach einer linearen Skala von 1 bis 9 ausgewertet, wobei

1 = totale Pflanzenschädigung,
9 = unbeeinträchtigter Zustand (wie unbehandelte Kontrollpflanzen) und
2 bis 8 = Zwischenstufen der Schädigung bedeuten
5 = 50 % Wirkung

1. Versuch :

a) Herbizid (H) : 2-Chlor-4-äthylamino-6-tert. butylamino-s-triazin : 1 und 2 kg/ha.

b) Mischung von H mit Antidote (A) No. 7 [4-(3',5'-Dichlorpyridyl-2'-oxy)-α-phenoxy-propionthiol-säure-β-diäthylaminoäthyl-ester] in den Mengenverhältnissen (Dosierung) H : A = 2 : 4, 2 : 2 und 1 : 2 kg/ha.

Testpflanzen : Weizen « Farnese »

Alopecurus Myosuroides, Avena fatua, Stellaria media, Viola tricolor } Unkräuter.

Ergebnisse :

| Testpflanzen / Produkte | | Weizen | | Alopecurus | | Avena fatua | | Stellaria media | | Viola tricolor | |
|---|---|---|---|---|---|---|---|---|---|---|---|
| H | A | | | | | | | | | | |
| kg/ha | | H allein | H + A | H | H + A | H | H + A | H | H + A | H | H + A |
| 2 | 4 | 1 | 7 | 1 | 1 | 1 | 2 | 1 | 1 | 1 | 1 |
| 2 | 2 | 1 | 8 | 1 | 1 | 1 | 2 | 1 | 1 | 1 | 1 |
| 1 | 2 | 2 | 8 | 1 | 1 | 1 | 2 | 1 | 1 | 1 | 1 |

Die drei verschiedenen Mischungen H + A lassen den Weizen praktisch ungeschädigt, während das Herbizid H allein den Weizen total vernichtet. Bei den Unkräutern ist in der extremen Schadwirkung kein Unterschied zu verzeichnen, ob nun das Herbizid allein oder in Mischung mit dem Antidote No. 7 verwendet wird.

2. Versuch

Es wird die Phytotoxizität von 2-Chlor-4-äthylamino-6-tert.butylamino-s-triazin (H) in Mischung mit anderen Antidotes der Formel I auf Weizen « Farnese » geprüft.

Dosierung a) Herbizid (H) : 1,5 kg pro Hektar (0,15 g pro $m^2$)
Antidote (A) : 4,0 kg pro Hektar (0,4 g pro $m^2$) (siehe No. der Antidote-Tabelle)
Dosierung b) Herbizid (H) : 1 oder 2 kg/ha
Antidote (A) : 4 ; 2 oder 1 kg/ha

Bei Verwendung von 1 kg/ha Herbizid allein wurde Schädigungsnote *3* erhalten. Bei Verwendung von 2 kg/ha Herbizid allein war die Schädigungsnote = *2*.
Bei Verwendung von 1,5 kg/ha Herbizid allein wurde Schädigung *3* erhalten.

| a) A No. | Note Herbizid H (1,5 kg/ha) + Antidote A (4,0 kg/ha) |
|---|---|
| 1 | 8 |
| 2 | 7 |
| 3 | 7 |
| 4 | 7 |
| 5 | 8 |
| 7 | 8 |
| 8 | 7 |

| b) A No. | H + A 2 + 4 kg/ha | 2 + 2 kg/ha | 1 + 2 kg/ha | 1 + 1 kg/ha |
|---|---|---|---|---|
| 1 | 7 | 6 | 8 | 8 |
| 2 | 8 | 7 | 9 | 8 |
| 3 | 5 | 5 | 9 | 8 |
| 4 | 3 | 4 | 8 | 8 |
| 5 | 7 | 7 | 8 | 9 |
| 7 | 7 | 8 | 8 | 9 |
| 8 | 6 | 8 | 9 | 9 |

zu b) Während vereinzelt bei der höheren Herbizidkonzentration von 2 kg/ha der Zusatz von einigen

Antidotes (No. 3 und 4) keinen zufriedenstellenden Phytotoxizitätsrückgang erbringt, sind die Verbesserunger der Phytotox-Werte bei Antidote-Zusatz zu 1 kg/ha Herbizid frappierend gut für *alle* in dem Test zur Anwendung gebrachten Antidotes.

Die in der Tabelle für Antidotes No. 5 [4-(3,5'-Dichlorpyridyl-2'-oxy)-phenoxy-propionthiolsäure-propargylester] aufgeführten Resultate konnten in 3 kleinen Feldversuchen in der Umgebung Basels bestätigt werden.

Antidote No. 8 [4-(3',5'-Dichlorpyridyl-2'-oxy)-α-phenoxy-propionthiolsäure-phenylester] bewirkte auf Sommerweizen (Sorte Colibri) bei Verwendung mit 2-Methoxy-4-äthylamino-6-sec. butylamino-s-triazin als Herbizid im Mengenverhältnis 0,5 + 1 und 1 + 1 kg/ha eine Phytotoxizitätsabnahme von Note 2 (Triazin allein) auf Note 6.

Derselbe Antagonist No. 8 reduzierte die Phytotoxizität von Atrazin auf Sommerweizen (Sorte Mazurka) beim Mengenverhältnis 1 + 1 kg/ha von Note 1 (1 kg Atrazin allein) auf Note 7.

Das erfindungsgemässe Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Bindemitteln oder auch Düngemitteln.

Der Wirkstoffgehalt in handelsfähigen Mitteln liegt zwischen 0,1 bis 95 Gewichtsprozent vorzugsweise 1 bis 80 Gewichtsprozent.

Zur Applikation kann die Verbindungskombination in den folgenden Aufarbeitungsformen vorliegen (wobei die Gewichts-Prozentangaben in Klammern vorteilhafte Mengen an Wirkstoff darstellen) :

Feste Aufarbeitungsformen : Stäubemittel und Streumittel (bis zu 10 %) Granulate, Umhüllungsgranulate, Imprägnierungsgranulate und Homogengranulate (1 bis 80 %) ;

Flüssige Aufarbeitungsformen :

a) in Wasser dispergierbare Wirkstoffkonzentrate :

Spritzpulver (wettable powders) und Pasten (25-90 % in der Handelspackung, 0,01 bis 15 % in gebrauchsfertiger Lösung) ; Emulsions- und Lösungskonzentrate (10 bis 50 % ; 0,01 bis 15 % in gebrauchsfertiger Lösung) ;

b) Lösungen (0,01 bis 20 %) ;

Zur Herstellung fester Aufarbeitungsformen (Stäubemittel, Streumittel, Granulate) werden die Wirkstoffe mit festen Trägerstoffen vermischt. Als Trägerstoffe kommen zum Beispiel Kaolin, Talkum, Bolus, Löss, Kreide, Kalkstein, Kalkgrits, Ataclay, Dolomit, Diatomeenerde, gefällte Kieselsäure, Erdalkalisilikate, Natrium- und Kaliumaluminiumsilicate (Feldspäte und Glimmer), Calcium- und Magnesiumsulfate, Magnesiumoxid, gemahlene Kunststoffe, Düngemittel wie Ammoniumsulfat, Ammoniumphosphat, Ammoniumnitrat, Harnstoff, gemahlene pflanzliche Produkte, wie Getreidemehl, Baumrindmehl, Holzmehl, Nußschalenmehl, Cellulosepulver, Rückstände von Pflanzenextraktionen, Aktivkohle etc., je für sich oder als Mischungen untereinander in Frage.

Granulate lassen sich herstellen, indem man die Wirkstoffe in einem organischen Lösungsmittel löst und die so erhaltene Lösung auf ein granuliertes Mineral, z.B. Attapulgit, $SiO_2$, Granicalcium oder Betonit, aufbringt und dann das Lösungsmittel wieder verdampft.

Polymerengranulate können hergestellt werden, indem man z.B. ein fertiges, poröses Polymerengranulat, wie Harnstoff/Formaldehyd-Polymerisate, Polyacrylnitril und Polyester mit bestimmter Oberfläche und günstigem vorausbestimmenten Absorptions/Desorptionsverhältnis mit den Wirkstoffen, z.B. in Form ihrer Lösungen in einem niedrig siedenden Lösungsmittel, imprägniert und das Lösungsmittel entfernt. Derartige Polymerengranulate können in Form von Mikrogranulaten mit Schüttgewicht von vorzugsweise 300 g/Liter bis 600 g/Liter auch mit Hilfe von Zerstäubern aufgebracht werden. Das Zerstäuben kann über ausgedehnte Behandlungsflächen mit Flugzeugen durchgeführt werden.

Granulate sind auch durch Kompaktieren des Trägermaterials mit den Wirk- und Zusatzstoffen und anschliessendes Zerkleinern erhältlich.

Diesen Mitteln können ferner Wirkstoff-stabilisierende Zusätze und/oder nichtionische, anionenaktive, kationenaktive Stoffe zugegeben werden, die beispielsweise die Haftfestigkeit der Wirkstoffe auf Pflanzen und Pflanzenteile verbessern (Haft- und Klebemittel) und/oder eine bessere Benetzbarkeit (Netzmittel) sowie Dispergierbarkeit (Dispergatoren) gewährleisten.

Als Klebemittel kommen beispielsweise in Frage :

Olein-Kalk-Mischung, Cellulosederivate (Methylcellulose, Carboxymethylcellulose), Hydroxyäthylenglykoläther von Mono- und Dialkylphenolen mit 5 bis 15 Aethylenoxidresten pro Molekül und 8 bis 9 Kohlenstoffatomen im Alkylrest, Ligninsulfonsäure, deren Alkalimetall- und Erdalkalimetallsalze, Polyäthylenglykoläther, Fettalkoholpolyglykoläther mit 5 bis 20 Aethylenoxidresten pro Molekül und 8 bis 18 Kohlenstoffatomen im Fettalkoholteil, Kondensationsprodukte von Aethylenoxid, Propylenoxid, Polyvinylpyrrolidone, Polyvinylalkohole, Kondensationsprodukte von Harnstoff-Formaldehyd sowie Latex-Produkte.

In Wasser dispergierbare Wirkstoffkonzentrate, d.h. Spritzpulver (wettable powder), Pasten und Emulsionskonzentrate stellen Mittel dar, die mit Wasser auf jede gewünschte Konzentration verdünnt

werden können. Sie bestehen aus Wirkstoff, Trägerstoff, gegebenenfalls Wirkstoff-stabilisierenden Zusätzen, oberflächenaktiven Substanzen und Antischaummitteln und gegebenenfalls Lösungsmitteln.

Die Spritzpulver (wettable powder) und Pasten werden erhalten, indem man die Wirkstoffe mit Dispergiermitteln und pulverförmigen Trägerstoffen in geeigneten Vorrichtungen bis zur Homogenität vermischt und vermahlt. Als Trägerstoffe kommen beispielsweise die vorstehend für die festen Aufarbeitungsformen erwähnten in Frage. In manchen Fällen ist es vorteilhaft, Mischungen verschiedener Trägerstoffe zu verwenden. Als Dispergatoren können beispielsweise verwendet werden : Kondensationsprodukte von sulfoniertem Naphthalin und sulfonierten Naphthalinderivaten mit Formaldehyd, Kondensationsprodukte des Naphthalins bzw. von Naphthalinsulfonsäuren mit Phenol und Formaldehyd sowie Alkalimetall-, Ammonium- und Erdalkalimetallsalze von Ligninsulfonsäure, weiter Alkylarylsulfonate, Alkali- und Erdalkalimetallsalze der Dibutylnaphthalinsulfonsäure, Fettalkoholsulfate, wie Salze sulfatierter Hexadecanole, Heptadecanole und Salze von sulfatiertem Fettalkoholpolyäthylenglykoläther, das Natriumsalz von Oleylmethyltaurid, Dialkyldilaurylammoniumchlorid und fettsaure Alkali- und Erdalkalimetallsalze.

Als Antischaummittel kommen zum Beispiel Silicone in Frage.

Die Wirkstoffe werden mit den oben aufgeführten Zusätzen so vermischt, vermahlen, gesiebt und passiert, dass bei den Spritzpulvern der feste Anteil eine Korngrösse von 0,02 bis 0,04 und bei den Pasten von 0,03 mm in der Regel nicht überschreitet. Zur Herstellung von Emulsionskonzentraten und Pasten werden Dispergiermittel, wie sie in den vorangehenden Abschnitten aufgeführt wurden, organische Lösungsmittel und Wasser verwendet. Als Lösungsmittel kommen beispielsweise Alkohole, Benzol, Xylole, Toluol, Dimethylsulfoxid, N,N-dialkylierte Amide und Trialkylamine in Frage. Die Lösungsmittel müssen praktisch geruchlos, nicht phytotoxisch, den Wirkstoffen gegenüber inert und nicht leicht brennbar sein.

Ferner können die erfindungsgemässen Mittel in Form von Lösungen angewendet werden. Hierzu werden die beiden Wirkstoffe a) (Herbizid) und b) (Antidote) in geeigneten organischen Lösungsmitteln, Lösungsmittelgemischen, Wasser oder Gemischen von organischen Lösungsmitteln mit Wasser gelöst. Als organische Lösungsmittel können z.B. aliphatische und aromatische Kohlenwasserstoffe, deren chlorierte Derivate oder Alkylnaphthaline verwendet werden.

Den beschriebenen erfindungsgemässen Mitteln lassen sich andere biozide Wirkstoffe oder Mittel beimischen, zum Beispiel Insektizide, Akarizide, Fungizide, Bakterizide, Wuchsregulatoren, Rodentizide oder Nematozide zur Verbreiterung des Wirkungsspektrums. Die erfindungsgemässen Mittel können ferner noch Pflanzendünger, Spurenelemente und andere den Nutzpflanzenanbau fördernde Begleitstoffe enthalten. Selbstverständlich sind auch Mittel möglich, welche mehrere Vertreter der Herbizidkomponente a) und/oder der Antidote-Komponente b) enthalten.

Die Wirkstoffe können beispielsweise wie folgt formuliert werden (Teile bedeuten Gewichtsteile) :

### Stäubemittel

Zur Herstellung eines 3 %-igen Stäubemittels werden die folgenden Stoffe verwendet :

3 Teile Wirkstoffgemisch (1 : 1),
97 Teile Talkum

Die Wirkstoffe werden mit den Trägerstoffen vermischt und vermahlen.

### Granulat

Zur Herstellung eines 5 %-igen Granulates werden die folgenden Stoffe verwendet :

5 Teile Wirkstoffgemisch (a : b = 2 : 1)
0,25 Teile Epichlorhydrin
0,25 Teile Cetylpolyäthylenglykoläther mit 8 Mol Aethylenoxid,
3,50 Teile Polyäthylenglykol,
91 Teile Kaolin (Korngrösse 0,3 bis 0,8 mm)

Die Aktivsubstanz wird mit Epichlorhydrin vermischt und in 6 Teilen Aceton gelöst, hierauf werden Polyäthylenglykol und Cetylpolyäthylenglykoläther zugesetzt. Die so erhaltene Lösung wird auf Kaolin aufgesprüht und anschliessend im Vakuum verdampft.

### Spritzpulver

Zur Herstellung eines a) 70 %-igen und b) 25 %-igen Spritzpulvers werden folgende Bestandteile verwendet :

a) 42 Teile 2-Chlor-4-äthylamino-6-tert. butylamino-s-triazin,

28 Teile Wirkstoff No. 7,
5 Teile Natriumdibutylnaphthylsulfonat,
3 Teile Naphthalinsulfonsäuren-Phenolsulfonsäuren-Formaldehyd-Kondensat 3 : 2 : 1,
10 Teile Kaolin,
12 Teile Champagne-Kreide ;

b) 15 Teile Atrazin
10 Teile Wirkstoff No. 5
5 Teile Oleylmethyltaurid-Natrium-Salz,
2,5 Teile Naphthalinsulfonsäuren-Formaldehyd-Kondensat,
0,5 Teile Carboxymethylcellulose,
5 Teile neutrales Kalium-Aluminium-Silikat,
62 Teile Kaolin ;

Die Wirkstoffe werden mit den Hilfsmitteln auf Kaolin bzw. Kreide aufgezogen und anschliessend vermischt und vermahlen. Man erhält Spritzpulver von vorzüglicher Benetzbarkeit und Schwebefähigkeit. Aus solchen Spritzpulvern können durch Verdünnen mit Wasser Suspensionen jeder gewünschten Wirkstoffkonzentration erhalten werden. Derartige Suspensionen lassen sich zur Bekämpfung von Unkräutern und Ungräsern in Getreidekulturen verwenden.

Paste

Zur Herstellung einer 45 %-igen Paste werde folgende Stoffe verwendet :

30 Teile eine herbiziden Triazins,
15 Teile eines Antidote der Formel I,
5 Teile Natriumaluminiumsilikat,
14 Teile Cetylpolyäthylenglykoläther mit 8 Mol Aethylenoxid,
1 Teil Oleylpolyäthylenglykoläther mit 5 Mol Aethylenoxid,
2 Teile Spindelöl,
23 Teile Wasser
10 Teile Polyäthylenglykol

Die Wirkstoffe werden mit den Zuschlagstoffen in geeigneten Geräten homogenisiert und vermahlen. Man erhält eine Paste, aus der sich durch Verdünnen mit Wasser Suspensionen jeder gewünschten Konzentration herstellen lassen.

Emulsionskonzentrat

Zur Herstellung eines 25 %-igen Emulsionskonzentrates werden

25 Teile Wirkstoffgemisch (a : b = 1 : 1),
5 Teile Mischung von Nonylphenolpolyoxyäthylen und Calcium-dodecylbenzol-sulfonat,
35 Teile 3,5,5-Trimethyl-2-cyclohexen-1-on,
35 Teile Dimethylformamid

miteinander vermischt. Dieses Konzentrat kann mit Wasser zu Emulsionen auf geeignete Konzentrationen verdünnt werden.

Die Wirkstoffkombination kann in einer der gebräuchlichen Formulierungen in üblicher Weise, z.B. durch Verstäuben, Versprühen, Verspritzen, Giessen oder Verstreuen, angewendet werden.

**Ansprüche**

1. Verfahren zur selektiven pre-emergenten Unkrautbekämpfung in Getreidekulturen, dadurch gekennzeichnet, dass man angesäte oder zur Getreideansaat vorgesehene landwirtschaftliche Anbauflächen gleichzeitig oder nacheinander einerseits mit einem Herbizid aus der Reihe der 4,6-Bis($C_1$-$C_4$ alkyl)-amino-s-triazine, welche in der 2-Position durch Chlor, Brom, Methoxy, Methylthio oder Aethylthio substituiert sind, und andererseits mit einem antagonisierend wirkenden Pyridyl-(2)-oxy-phenoxy-α-propionthiolsäurederivat der Formel I

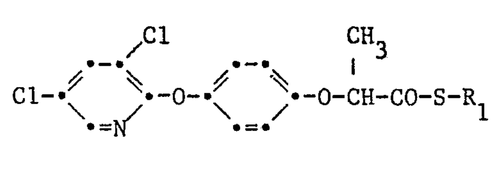

(I)

behandelt, um die schädigende Wirkung des genannten Triazinherbizids auf das Getreide abzuschwächen oder aufzuheben, ohne die Herbizidwirkung auf die Unkräuter merklich zu beeinträchtigen, wobei in der Formel I der Rest $R_1$ Wasserstoff ; $C_1$-$C_{18}$ Alkyl, das durch Halogen oder durch eine Cyanogruppe substituiert sein kann ; den β-Diäthylaminoäthylrest ; gegebenenfalls durch Halogen substituiertes $C_3$-$C_{18}$ Alkenyl ; $C_3$-$C_8$ Alkinyl oder Phenyl bedeutet, mit der Massgabe, dass das angewendete Mengenverhältnis von Triazinherbizid zu Propionthiolsäurederivat zwischen 4 : 1 und 1 : 4 beträgt.

2. Verfahren gemäss Anspruch 1, dadurch gekennzeichnet, dass man als Triazinherbizid 2-Chlor-4-äthylamino-6-tert. butylamino-s-triazin verwendet.

3. Verfahren gemäss Anspruch 1, dadurch gekennzeichnet, dass man als antagonisierend wirkendes Propionthiolsäurederivat der Formel I den Propargylester oder den β-Diäthylamino-äthylester der 4-(3',5'-Dichlorpyridyl-2'-oxy)-α-phenoxy-propionthiolsäure verwendet.

4. Verfahren gemäss Ansprüchen 1 bis 3, dadurch gekennzeichnet, dass man die Anbauflächen mit Mitteln behandelt, welche das Triazinherbizid und das Propionthiolsäurederivat der Formel I in gegenseitigen Mengenverhältnissen zwischen 1 : 4 und 4 : 1 enthalten.

5. Mittel zur selektiven pre-emergenten Unkrautbekämpfung in Getreidekulturen, dadurch gekennzeichnet, dass es neben üblichen Träger- bzw. Zuschlagstoffen als aktive herbizide Komponente ein 4,6-bis-$C_1$-$C_4$ alkyl) amino-s-triazin, welches in der 2-Stellung durch Chlor, Brom, Methoxy, Methylthio oder Aethylthio substituiert ist, und als antagonisierende Komponente ein Pyridyl-(2)-oxy-phenoxy-α-propionthiolsäurederivat der Formel I

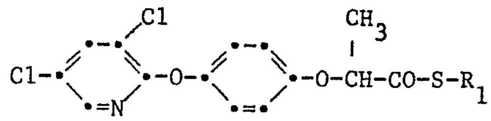

(I)

enthält, worin $R_1$ Wasserstoff ; $C_1$-$C_{18}$ Alkyl, das durch Halogen oder durch eine Cyanogruppe substituiert sein kann ; den β-Diäthylaminoäthylrest ; gegebenenfalls durch Halogen substituiertes $C_3$-$C_{18}$ Alkenyl ; $C_3$-$C_8$ Alkinyl ; oder Phenyl bedeutet, wobei das gegenseitige Mengenverhältnis von Triazinkomponente zu antagonisierender Komponente der Formel I zwischen 4 : 1 und 1 : 4 beträgt.

6 Mittel gemäss Anspruch 5, dadurch gekennzeichnet, dass es als herbizide Komponente 2-Chlor-4-äthylamino-6-tert.butylamino-s-triazin enthält.

7. Mittel gemäss Anspruch 5, dadurch gekennzeichnet, dass es als antagonisierend wirkende Komponente den Propargylester oder den β-Diäthylamino-äthylester der 4-(3',5'-Dichlorpyridyl-2'-oxy)-α-phenoxy-propionthiolsäure enthält.

**Claims**

1. A method of selectively controlling weeds preemergence in crops of cereals, which method comprises treating sown crops of cereals or areas of land intended for cereals cultivation, simultaneously or in succession, on the one hand with a herbicide selected from the series of the 4,6-bis($C_1$-$C_4$ alkyl)amino-s-triazines which are substituted in the 2-position by chlorine, bromine, methoxy, methylthio or ethylthio, and, on the other hand, with an antagonising pyridyl-(2)-oxyphenoxy-α-thiopropionic acid derivative of the formula I

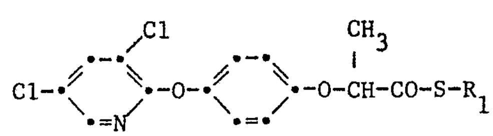

(I)

for diminishing or neutralising the harmful action of said triazine herbicide on the cereals without any noticeable deleterious effect on the herbicidal action against the weeds, in which formula I above $R_1$ is hydrogen, $C_1$-$C_{18}$ alkyl which may be substituted by halogen or a cyano group, or is the β-diethylaminoethyl radical, $C_3$-$C_{18}$ alkenyl which is unsubstituted or substituted by halogen, or is $C_3$-$C_8$ alkynyl or phenyl, with the proviso that the ratio of triazine herbicide to thiopropionic acid derivative is from 4 : 1 to 1 : 4.

2. A method according to claim 1, wherein the triazine herbicide is 2-chloro-4-ethylamino-6-tert-butylamino-s-triazine.

3. A method according to claim 1, wherein the antagonising thiopropionic acid derivative of the formula I is the propargyl ester or the β-diethylaminoethyl ester of 4-(3',5'-dichloropyridyl-2'-oxy)-α-phenoxythiopropionic acid.

4. A method according to any one of claims 1 to 3, which comprises treating the crop areas with a composition which contains the triazine herbicide and the thiopropionic acid derivative of the formula I in a ratio of 1 : 4 to 4 : 1.

5. A composition for selectively controlling weeds preemergence in crops of cereals, which contains as active herbicidal component a 4,6-bis-($C_1$-$C_4$ alkyl) amino-s-triazine which is substituted in the 2-position by chlorine, bromine, methoxy, methylthio or ethylthio, and, as antagonising component, a pyridyl-(2)-oxyphenoxy-α-thiopropionic acid derivative of the formula

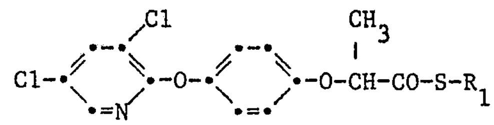

(I)

in wherein $R_1$ is hydrogen, $C_1$-$C_{18}$ alkyl which may be substituted by halogen or a cyano group, or is the β-diethylaminoethyl radical, $C_3$-$C_{18}$ alkenyl which is unsubstituted or substituted by halogen, or is $C_3$-$C_8$ alkynyl or phenyl, with the proviso that the ratio of triazine component to antagonising component of the formula I is from 4 : 1 to 1 : 4.

6. A composition according to claim 5, wherein the herbicidal component is 2-chloro-4-ethylamino-6-tert-butylamino-s-triazine.

7. A composition according to claim 5, wherein the antagonising component is the propargyl ester or the β-diethylaminoethyl ester of 4-(3',5'-dichloropyridyl-2'-oxy)-α-phenoxythiopropionic acid.

## Revendications

1. Procédé pour le désherbage sélectif en pré-levée dans les cultures de céréales, caractérisé en ce que l'on traite les surfaces de culture ensemencées ou prévues pour les semailles de céréales, simultanément ou successivement, d'une part par un herbicide de la série des 4,6-bis(alkyle en $C_1$-$C_4$) amino-s-triazines substituées en position 2 par le chlore, le brome, un groupe méthoxy, méthylthio ou éthylthio, et d'autre part par un dérivé d'acide pyridyl-(2)-oxy-phénoxy-α-propionthiolique à effet antagoniste, de formule 1

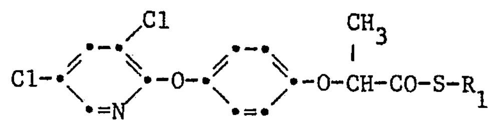

(I)

afin d'amoindrir ou de supprimer les effets nocifs de l'herbicide du type triazine en question sur les céréales sans affecter dans une mesure notable l'activité herbicide sur les mauvaises herbes, les symboles de la formule I ayant les significations suivantes : $R_1$ représente l'hydrogène, un groupe alkyle en $C_1$-$C_{18}$ qui peut être substitué par un halogène ou par un groupe cyano ; le groupe β-diéthylaminoéthyle ; un groupe alcényle en $C_3$-$C_{18}$ éventuellement substitué par un halogène ; un groupe alcynyle en $C_3$-$C_8$ ou phényle, étant précisé que l'herbicide du type triazine et le dérivé propionthiolique sont utilisés à des proportions relatives de 4 : 1 à 1 : 4.

2. Procédé selon la revendication 1, caractérisé en ce que l'on utilise en tant qu'herbicide du type triazine la 2-chloro-4-éthylamino-6-tert.butylamino-s-triazine.

3. Procédé selon la revendication 1, caractérisé en ce que l'on utilise en tant que dérivé de l'acide propionthiolique à effet antagoniste de formule 1 l'ester propargylique ou l'ester β-diéthylamino-éthylique de l'acide 4-(3',5'-dichloropyridyl-2'-oxy)-α-phénoxy-propionthiolique.

4. Procédé selon les revendications 1 à 3, caractérisé en ce que l'on traite les surfaces de culture par des produits qui contiennent l'herbicide du type triazine et le dérivé d'acide propionthiolique de formule 1 à des proportions mutuelles de 1 : 4 à 4 : 1.

5. Produit pour le désherbage sélectif en pré-levée dans les cultures de céréales, caractérisé en ce qu'il contient, avec des véhicules et additifs usuels, en tant que composant herbicide une 4,6-bis-(alkyl en $C_1$-$C_4$) amino-s-triazine substituée en position 2 par le chlore, le brome, un groupe méthoxy, méthylthio ou éthylthio, et en tant que composant antagonisant un dérivé d'acide pyridyl-(2)-oxy-phénoxy-α-propionthiolique de formule 1

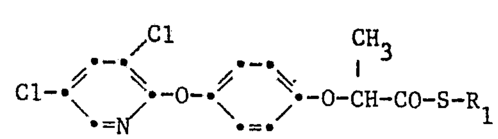

(I)

dans laquelle $R_1$ représente l'hydrogène ; un groupe alkyle en $C_1$-$C_{18}$ qui peut être substitué par un halogène ou par un groupe cyano ; le groupe β-diéthylaminoéthyle ; un groupe alcényle en $C_3$-$C_{18}$ éventuellement substitué par un halogène ; un groupe alcynyle en $C_3$-$C_8$ ; ou un groupe phényle, les proportions mutuelles entre le composant triazine et le composant antagonisant de formule 1 allant de 4 : 1 à 1 : 4.

6. Produit selon la revendication 5, caractérisé en ce qu'il contient en tant que composant herbicide la 2-chloro-4-éthylamino-6-tert.butylamino-s-triazine.

7. Produit selon la revendication 5, caractérisé en ce qu'il contient en tant que composant à effet antagoniste l'ester propargylique ou l'ester β-diéthylaminoéthylique de l'acide 4-(3',5'-dichloropyridyl-2'-oxy)-α-phénoxy-propionthiolique.